# EUROPEAN PATENT APPLICATION

(11) **EP 2 863 166 A1**
(43) Date of publication of application: **22.04.2015**
(21) Application number: 13804805.3
(22) Date of filing: 22.05.2013
(51) Int. Cl.: G01B 11/25

(54) **SYNTHESIS-PARAMETER GENERATION DEVICE FOR THREE-DIMENSIONAL MEASUREMENT APPARATUS**

(30) Priority: 13.06.2012 JP 2012133505
(71) Applicant: Shima Seiki Manufacturing., Ltd., Wakayama-shi, Wakayama 641-0003 (JP)
(72) Inventor: IWAI, Kazutaka, Wakayama-shi, Wakayama 641-0003 (JP); SHIMO, Kosuke, Wakayama-shi, Wakayama 641-0003 (JP)
(74) Representative: Carstens, Dirk Wilhelm
(86) International application number: PCT/JP2013/064278
(87) International publication number: WO 2013/187204

(57) **Abstract**

A plurality of units (4) constituted by a projector (6) that projects a periodic lattice onto a measurement target (1) and a camera (8) that images the projected lattice are included around the measurement target (1), and three-dimensional coordinates measured by the respective units (4) are composited by coordinate conversion. A first lattice that is displayed on a reference surface (42) is imaged, and phases with respect to the first lattice are obtained for respective pixels of the cameras (8) and stored. A second lattice is projected from the projector (6) onto the reference surface (42) and imaged, and three-dimensional coordinates of the reference surface (42) are stored for respective pixels of the cameras (8). The phases of the respective pixels of the cameras (8) are interpolated, and sub-pixels whose phases match each other between the cameras (8) are generated. Three-dimensional coordinates of the respective sub-pixels are obtained, and a compositing parameter is generated so that the three-dimensional coordinates of sub-pixels having the same phases match each other between the units (4). The accuracy of the compositing parameter for coordinate conversion is improved.

## Description

### Technical Field

The present invention relates to three-dimensional measurement, and in particular to coordinate conversion among a plurality of measurement units.

### Background Art

The inventors are developing an apparatus for measuring the three-dimensional shape of a measurement target such as a human body, using a plurality of units that include a camera and a projector. In this apparatus, pieces of measurement data based on coordinate systems of the respective units are converted into data based on a common coordinate system and composited, and the three-dimensional shape of the target is obtained.

With respect to coordinate conversion between units, Patent Literature 1 (JP 4429135B) discloses the following points. Measurement of the three-dimensional shape is performed by a phase shift method (for example, Patent Literature 2: JP 2903111B). A sinusoidal wave-shaped pattern is projected from a projector of one of two units and images are captured, for example, four times while shifting the pattern, for example, by one quarter wave length of the sinusoidal wave at a time. Then, the phases of respective pixels with respect to the sinusoidal wave are measured, and the three-dimensional shape of the target is measured. Note that, in the phase shift method, when phases have been obtained, three-dimensional coordinates are obtained. The sinusoidal wave-shaped pattern that was projected by the projector is imaged by another unit as well, and feature points are extracted based on, for example, data on the shape or a texture of the target. Then, matching of the feature points is performed between images captured by the two units, and the feature points are associated with phases, realizing high-accuracy matching. However, with this method, it is difficult to extract a large number of feature points, and thus the accuracy of the coordinate conversion is limited.

The following describes a related conventional technique. Patent Literature 3 (JPH 3-58442B) proposes a method for measuring a three-dimensional shape, in which a sinusoidal wave-shaped pattern is not shifted but rather fixed to a target. In this method, pixels are extracted from captured images, in order to virtually generate images that correspond to four images captured while the pattern is shifted.

### Citation List

### Patent Literature

Patent Literature 1: JP 4429135B
Patent Literature 2: JP 2903111B
Patent Literature 3: JPH 3-58442B

### Summary of the Invention

### Problems to be Solved by the Invention

It is an object of the present invention to enable sampling of a large number of points at the same positions among images captured by cameras of different units, so as to improve the accuracy of a compositing parameter for coordinate conversion.

It is furthermore an object of the present invention to enable sampling of points at exactly the same position.

### Means for Solving the Problem

A compositing parameter generation device according to the present invention generates a compositing parameter for a three-dimensional measurement apparatus that includes a plurality of units that surround a measurement target and are constituted by a projector that projects a periodic lattice onto the measurement target and a camera that images the projected lattice, measures three-dimensional coordinates of a surface of the measurement target using the respective units, and composites the measured three-dimensional coordinates by coordinate conversion between the units, the compositing parameter being for use for the coordinate conversion and being generated by the cameras of the respective units imaging a first lattice, which is displayed on a predetermined reference surface. The compositing parameter generation device of the present invention includes: means for storing, for respective pixels of the cameras, phases with respect to the first lattice, the phase being obtained from images in which the first lattice is captured by the cameras of the respective units; means for storing, for respective pixels of the cameras, three-dimensional coordinates of the reference surface in coordinate systems of the respective cameras, the three-dimensional coordinates being obtained when a second lattice is projected from the projectors of the respective units onto the reference surface and imaged by the cameras of the respective units; means for interpolating phases of the respective pixels of the cameras, generating sub-pixels whose phases match each other between the cameras, and obtaining three-dimensional coordinates of the respective sub-pixels in the coordinate systems of the respective cameras; and means for generating a compositing parameter for converting coordinate systems of the respective cameras into a reference coordinate system that is common between the units such that three-dimensional coordinates of sub-pixels having the same phases match between the units in the reference coordinate system that is common between the units.

According to the present invention, the compositing parameter is generated such that points whose phases with respect to the first lattice match each other are located at the same positions. It is rare for pixels that correspond to points at the same positions to exist at exactly the same positions between different cameras. Accordingly, sub-pixels are generated such that their phases match each other between the cameras. Since the number of the sub-pixels may be, for example, the same as that of the pixels, a large amount of sub-pixels whose phases exactly match each other between the cameras can be generated. Accordingly, the accuracy of the compositing parameter for coordinate conversion is improved.

The compositing parameter generation device may be a part of the three-dimensional measurement apparatus or may be a device separate from the three-dimensional measurement apparatus, and uses the function of the three-dimensional measurement apparatus when generating the compositing parameter. For example, obtaining phases with respect to the first lattice for respective pixels of the cameras is a part of the functions of the three-dimensional measurement apparatus. Obtaining three-dimensional coordinates of the reference surface is also a part of the functions of the three-dimensional measurement apparatus. The reference surface is, for example, a flat surface but may be a curved surface or the like. Pixels of the cameras refer to not all pixels of the cameras, but rather pixels of a camera image that are used in generation of the compositing parameter. The predetermined reference surface refers to, for example, the screen of a liquid crystal monitor or the like, a white plate, or a plate on which the first lattice is drawn, and need only be a surface on which the first lattice can be displayed in some kind of manner. Furthermore, the first lattice may be a lattice that is displayed on the screen of a liquid crystal monitor or the like, a lattice that is projected from the projector or the like of the three-dimensional measurement apparatus, a lattice that is drawn on the reference surface, or the like, and need only be a lattice that can be imaged by the cameras and by which phases can be obtained.

The compositing parameter generation device is preferably configured such that the first lattice is shifted by a distance that is one third or less of the pitch of the period of the lattice at a time, and is imaged at respective positions to which the first lattice is shifted. With this, the phases of the respective pixels are obtained from a plurality of images captured while the first lattice can be shifted.

It is preferable that a flat panel display is further provided whose screen serves as the reference surface and on which the first lattice is displayed. With this, the first lattice is accurately displayed and shifted.

Furthermore, the compositing parameter generation device is preferably configured such that the phases of the respective pixels of the cameras with respect to the first lattice are obtained from a plurality of second images obtained by regularly extracting pixels at varied positions from respective images of the first lattice captured without shifting. With this, phases with respect to the lattice can be obtained without the lattice being shifted.

### Brief Description of Drawings

FIG. 1 is a block diagram illustrating a three-dimensional measurement apparatus according to an embodiment.
FIG. 2 is a flowchart illustrating a compositing parameter generation algorithm according to the embodiment.
FIG. 3 is a block diagram illustrating a compositing parameter generation device according to the embodiment.
FIG. 4 is a plan view illustrating an arrangement of a reference surface and units according to the embodiment.
FIG. 5 is a diagram schematically illustrating compositing parameter generation according to the embodiment.
FIGS. 6 are diagrams illustrating phase calculation processes according to the embodiment: namely, FIG. 6a) shows a lattice image captured by a unit 4-1; FIG. 6b) shows a lattice image captured by a unit 4-2; FIG. 6c) shows a phase image in the x direction that was captured by the unit 4-1; FIG. 6d) shows a phase image in the x direction that was captured by the unit 4-2; FIG. 6e) shows a phase image in the y direction that was captured by the unit 4-1; and FIG. 6f) shows a phase image in the y direction that was captured by the unit 4-2.
FIG. 7 is a plan view illustrating an arrangement of a reference object and units according to a modification.
FIG. 8 is a front view illustrating the reference object according to the modification.
FIG. 9 is a plan view illustrating an arrangement of a reference surface and units according to a second modification.

### Description of Embodiment

The following describes preferred embodiments for implementing the invention.

### Embodiments

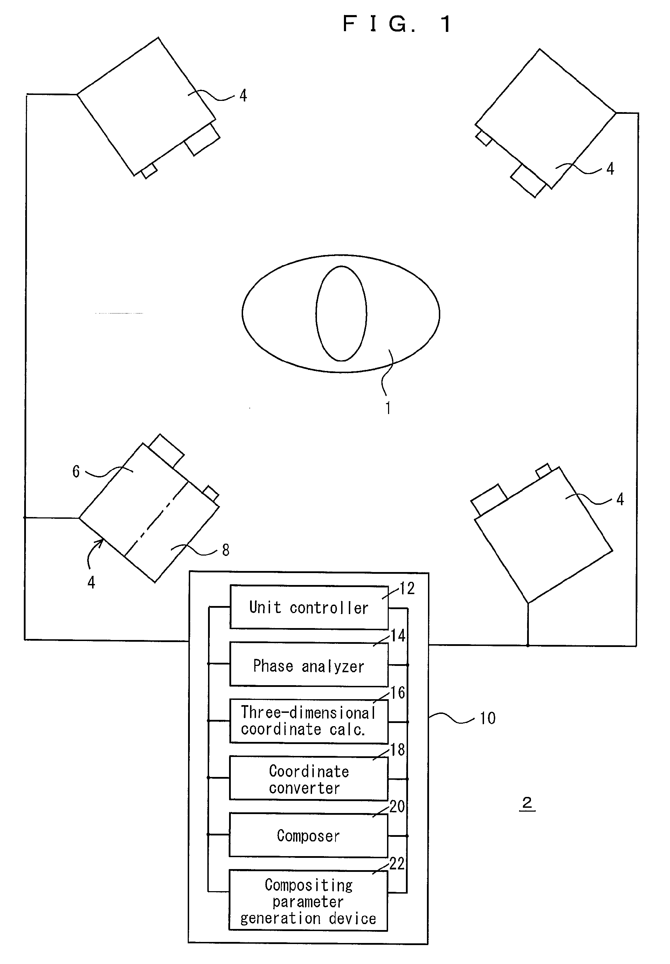

FIGS. 1 to 9 show a three-dimensional measurement apparatus 2, and a compositing parameter generation device 22 according to an embodiment. The compositing parameter generation device 22 is shown as a part of the three-dimensional measurement apparatus 2 but may be a separate device. The reference numeral 1 denotes a target whose three-dimensional shape is to be measured and is, for example, a human body, an article of furniture, a machine, an automobile, an architectural structure, or the like. Four or three units 4, for example, are arranged so as to surround the target 1, and each unit 4 includes a projector 6 and a digital camera 8. The projector 6 of the unit 4 projects a lattice onto the target 1, and the camera 8 performs imaging. Also, the units 4 are controlled by a controller 10, the images captured by the cameras 8 are processed, and a set of three-dimensional coordinates of the surface of the target 1 is obtained.

A unit controller 12 of the controller 10 controls lattice projection (light emission) and imaging performed by the units 4, and a phase analyzer 14 obtains, based on digital images captured by the cameras 8, phases θ (0 to 2π) in one pitch of the lattice on the surface of the target. A three-dimensional coordinate calculator 16 converts phases with a period of 2π into phases from the reference point of the lattice (2nπ+θ, where n is an integer), and obtains three-dimensional coordinates (xyz) of the target based on the phases and positions of pixels. The coordinates obtained in this way are based on the coordinate systems of the respective cameras 8, and thus a coordinate converter 18 converts the coordinates into three-dimensional coordinates in an appropriate reference coordinate system. When, for example, four units 4 are arranged, the same position on the target 1 is imaged by the plurality of units, and as a result a plurality of sets of three-dimensional coordinates are also obtained. A composer 20 obtains an average, weighted on the reliability for positions of pixels, of the plurality of three-dimensional coordinates and outputs a set of three-dimensional coordinates of the surface of the target 1 in the reference coordinate system.

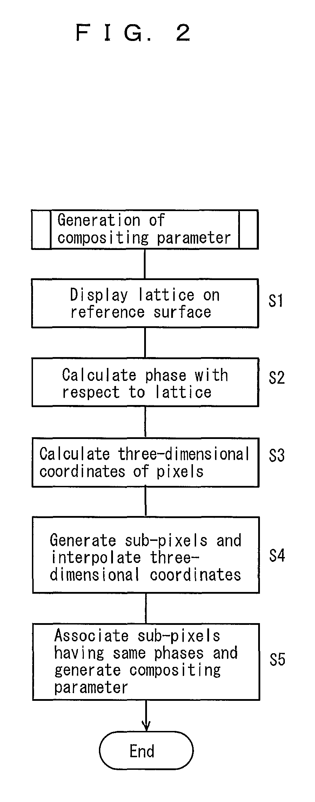

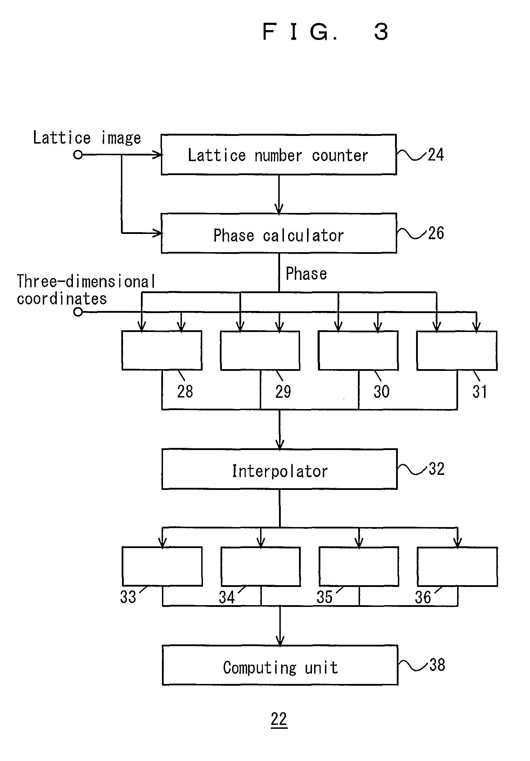

A compositing parameter generation algorithm is shown in FIG. 2, and a configuration of the compositing parameter generation device 22 is shown in FIG. 3. A first lattice is displayed on a reference surface (step 1), and the phases of respective pixels of the cameras 8 with respect to the first lattice are obtained (step 2). Furthermore, a second lattice is projected from the projectors 6 onto the reference surface, imaging is performed by the cameras 8, and three-dimensional coordinates of each pixel are obtained by the three-dimensional coordinate calculator 16 (step 3). With this, the phases and the three-dimensional coordinates of the respective pixels of the cameras 8 with respect to the first lattice are obtained. Since there are few pixels whose phases exactly match each other between the cameras, sub-pixels are generated so that their phases match, and three-dimensional coordinates are also interpolated (step 4). With this, a large number of sub-pixels whose phases exactly match each other between cameras and whose three-dimensional coordinates are known in the coordinate systems of the cameras are generated, and a compositing parameter is generated using these sub-pixels (step 5).

FIG. 3 shows a configuration of the compositing parameter generation device 22, and a lattice number counter 24 counts the lattice number from an end of the first lattice, for example,. A phase calculator 26 calculates phases with respect to the first lattice, but the phase analyzer 14 may calculates the phases. By the processing so far, the lattice number is known and the phases with respect to the lattice are also known, and thus complete phases of 2nπ + θ (where n is the lattice number, and θ is a phase that is 0 or more to less than 2π) are known. The complete phases are stored, together with the three-dimensional coordinates obtained by the three-dimensional coordinate calculator 16, in memories 28 to 31 in unit of pixels of the cameras. Note that, in the embodiment, the first lattice is displayed in the x direction (horizontal direction) and the y direction (vertical direction), and there are two types of phases since they are obtained with respect to the first lattice in the x direction and in the y direction. Furthermore, when the first lattice is assumed to be a lattice that has vertical and horizontal, bright and dark stripes, two types of phases in the x direction and the y direction can be obtained from the same lattice.

Although there are a large number of pixels that have substantially the same phase between different cameras, but there are few pixels having phases that exactly match each other. Accordingly, sub-pixels whose phases in the x direction and in the y direction have predetermined values, such as 2nπ+0, 2nπ+1/4π, ..., 2nπ+7/4π, are generated by interpolation with surrounding pixels by an interpolator 32. Three-dimensional coordinates of the surrounding pixels are interpolated based on the ratio of the interpolation, and are stored as three-dimensional coordinates of the sub-pixels, together with the phases in the x direction and the y direction, in memories 33 to 36 of the respective cameras. Note that, since the phases of the sub-pixels vary regularly, it is also possible that the phases are assigned to addresses of the memories 33 to 36 and stored virtually, and only the three-dimensional coordinates are actually stored.

Since there is a large number of pairs of sub-pixels having the same phases, a computing unit 38 generates a compositing parameter so that the sub-pixels having the same phases have the same three-dimensional coordinates. The parameter that is needed for coordinate conversion is three-dimensional translation vectors associated with the movement of the coordinate original point, and rotation matrices associated with rotation of a coordinate system (the angles of rotation are of three types of rotation about the x-axis, the y-axis, and the z-axis). With respect to these six unknown quantities, there are a large number of sub-pixels whose coordinates match due to coordinate conversion, and thus the compositing parameter can be accurately generated. The compositing parameter is a parameter for converting coordinates of one camera into coordinates of a reference coordinate system that is the coordinate system of another camera, or a parameter for converting coordinates of each camera into coordinates of a reference coordinate system that is a coordinate system independent from the cameras.

Four units located at positions that are shifted by 90° in an anti-clockwise rotation, for example, are numbered as units 4-1 to 4-4 in order. The units 4-1 and 4-2 can image the same lattice and the units 4-2 and 4-3 can image the same lattice, but it is difficult for the units 4-1 and 4-3 to image the same lattice. Accordingly, when it is assumed, for example, that the coordinate system of the camera of the unit 4-1 is the reference coordinate system, a compositing parameter for converting the coordinate system of the camera of the unit 4-2 into the reference coordinate system is generated and a compositing parameter for converting a coordinate system of the camera of the unit 4-4 into the reference coordinate system is generated in a similar manner. A compositing parameter for converting the coordinate system of the camera of the unit 4-3 into the coordinate system of the camera of the unit 4-2, and a compositing parameter for converting the coordinate system of the camera of the unit 4-3 into the coordinate system of the unit 4-4 are generated. When the coordinate conversions are composited in the order of the unit 4-3, the unit 4-2, and the unit 4-1, and the order of the unit 4-3, the unit 4-4, and the unit 4-1, two types of compositing parameters for performing coordinate conversion from the unit 4-3 to the unit 4-1 can be generated. A compositing parameter for performing coordinate conversion from the unit 4-3 to the unit 4-1 can be generated by averaging these two types of compositing parameters. Alternatively, coordinate conversion may be performed circularly in the order of the unit 4-4, the unit 4-3, the unit 4-2, and the unit 4-1, or may be performed in two routes, such as a route from the unit 4-3, to the unit 4-2, and to the unit 4-1, and a route from the unit 4-4 to the unit 4-1. It is arbitrary how coordinate conversions between the units are combined to perform overall coordinate conversion.

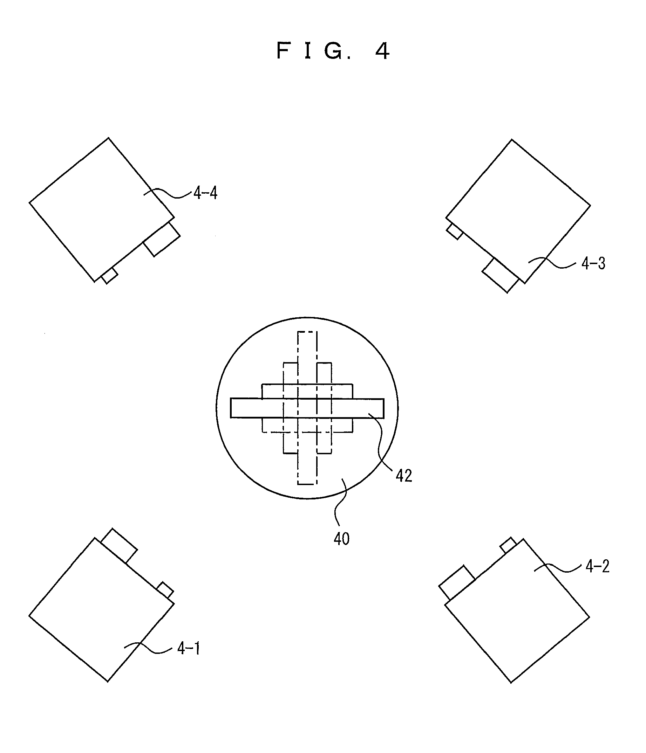

FIG. 4 shows an example in which a liquid crystal panel 42 is used to display the first lattice. Instead of the liquid crystal panel, another flat panel monitor may be used, and the panel 42 is arranged on a rotating table 40 and the direction of a reference surface is rotated by 90° at a time. Furthermore, a lattice whose contrast varies in the shape of a sinusoidal wave in the x direction and a lattice whose contrast varies in the shape of a sinusoidal wave in the y direction are displayed at each direction of the panel 42, and the displayed lattices are shifted by one quarter of the pitch of the lattices at a time, and images are captured by the cameras of the units 4 at each lattice position. Instead of projection of the first lattice from the liquid crystal panel 42, the projectors of the units 4 may project the first lattice.

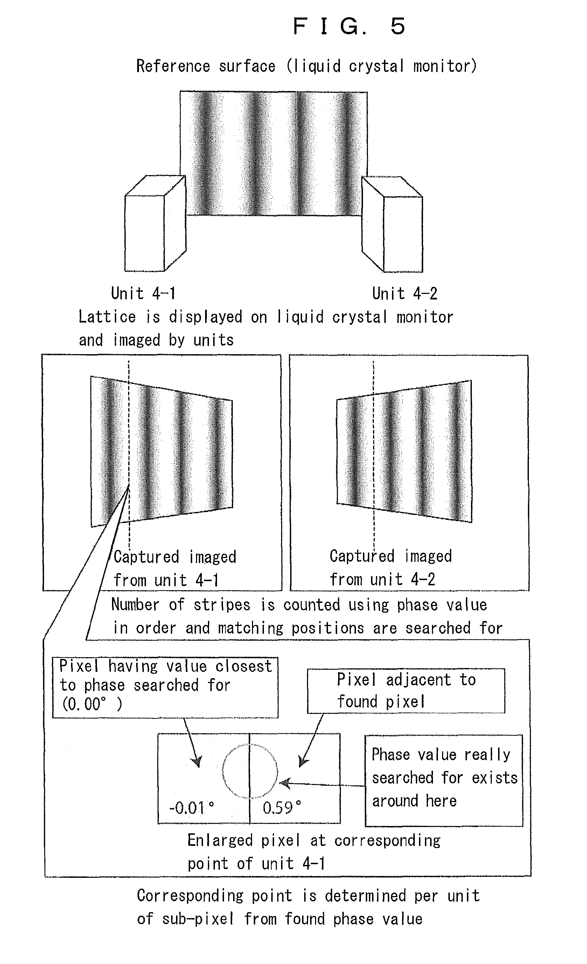

FIG. 5 shows an example in which the lattice in the x direction is displayed in the state of FIG. 4, and is imaged by the adjacent units 4-1 and 4-2, for example. The stripe number of the lattice is counted, and phases of pixels with respect to the lattice are obtained. It is assumed that pixels having the phases of 2nπ + 0.00° are searched for, and pixels having phases of -0.01° and +0.59°, for example, are found. Accordingly, by internally dividing these pixels in the ratio of 1:59, the points having the phase in the x direction of 0.00° are generated. By performing the same processing with respect to the y direction as well, a large number of sub-pixels whose phases in the x direction and the y direction have, for example, predetermined values, such as 2nπ + 0.00°, can be generated.

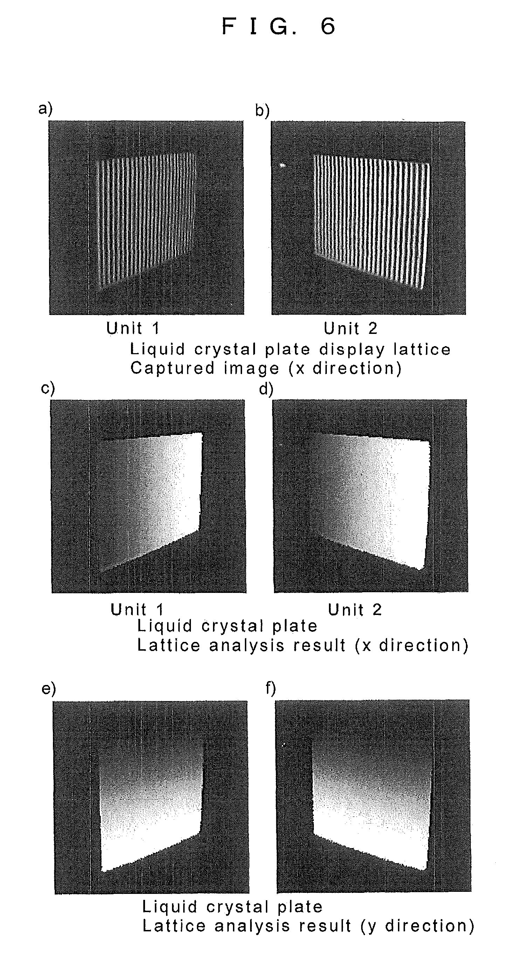

FIGS. 6a) and 6b) show images of the first lattice in the x direction that is displayed on the liquid crystal panel 42 in the state of FIG. 4, the images being captured by the cameras of the units 4-1 and 4-2. FIGS. 6c) and 6d) show phases in the x direction that were obtained from these images. Furthermore, FIGS. 6e) and 6f) show phases in the y direction that were obtained by the first lattice in the y direction being displayed on the liquid crystal panel 42.

Note that the position of the liquid crystal panel is measured by the units 4, and it is thus not necessary to arrange the reference surface at a known position. Similarly, the reference surface does not need to be a flat surface.

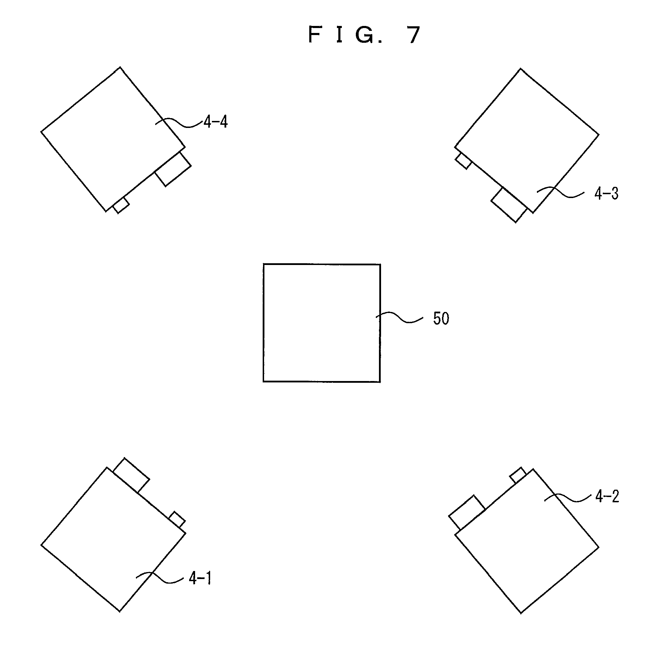

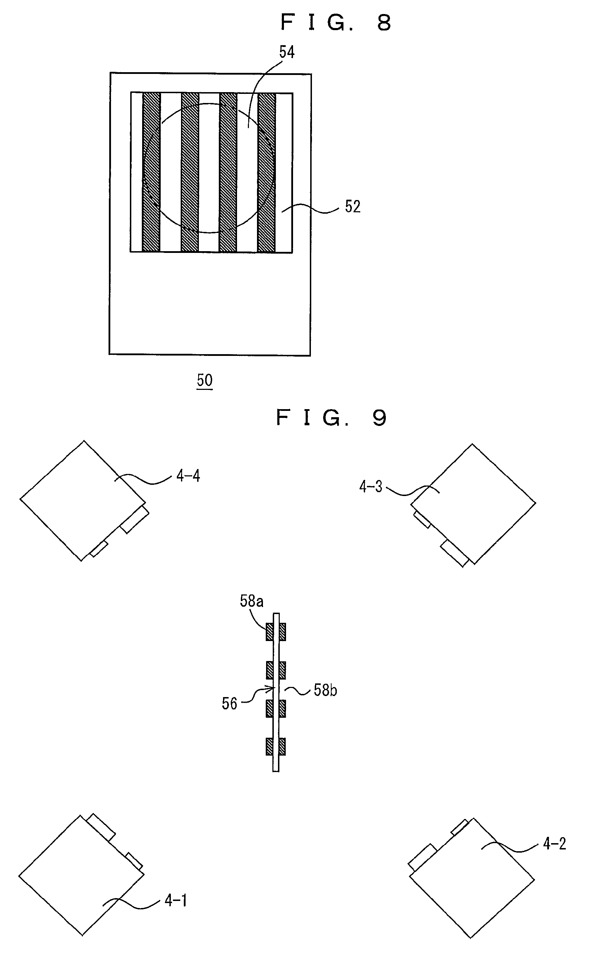

FIGS. 7 and 8 show a modification in which a quadrangular prism reference object 50 is used, and, as shown in FIG. 8, lattices 52 are mounted on four side surfaces of the reference object 50 so as to be rotatable by 90° by a rotating unit 54. Each lattice 52 is imaged by the cameras of two adjacent units, and the lattice 52 is rotated by 90° and imaged again. Although the lattice 52 is not shifted, phases with respect to the lattice 52 can be obtained as with Patent Literature 3. Furthermore, three-dimensional coordinates of points of the lattice 52 are obtained by the projector of the unit 4 projecting a second lattice. Note here that, when the lattice 52 is a lattice having vertical and lateral stripes, the rotating unit 54 is not needed.

FIG. 9 shows a second modification in which sinusoidal wave-shaped lattices 58 are drawn symmetrically on, for example, the two surfaces of a reference plate 56, which is transparent and has a constant thickness. For example, with respect to images from the unit 4-1, sub-pixels whose phases with respect to a lattice 58a have predetermined values are generated, and the three-dimensional coordinates of the sub-pixels are obtained. Similarly, with respect to images from the unit 4-2, sub-pixels whose phases with respect to a lattice 58b have predetermined values are generated, and the three-dimensional coordinates of the sub-pixels are obtained. Since the lattices 58a and 58b are symmetric, when the three-dimensional coordinates of the sub-pixels with respect to the lattice 58b are shifted in the thickness direction of the reference plate 56, the phase and the three-dimensional coordinates with respect to the lattice 58a can be handled as if they were obtained by the unit 4-2. Since the units 4-2 and 4-3, for example, can monitor the same lattice 58b, the processing is easier. In this way as well, it is possible to generate a compositing parameter. Note that, when the lattice 58 is a lattice having vertical and lateral stripes, the rotating unit or the like is not needed. Furthermore, when the lattice 58 is a lattice only having vertical stripes or lateral stripes, it is preferable to obtain phases in the horizontal direction and phases in the vertical direction using, for example, the rotating unit 54 of FIG. 8.

### DESCRIPTION OF REFERENCE NUMERALS

- 1: Target
- 2: Three-dimensional measurement apparatus
- 4: Unit
- 6: Projector
- 8: Camera
- 10: Controller
- 12: Unit controller
- 14: Phase analyzer
- 16: Three-dimensional coordinate calculator
- 18: Coordinate converter
- 20: Composer
- 22: Compositing parameter generation device
- 24: Lattice number counter
- 26: Phase calculator
- 28 to 31: Memory
- 32: Interpolator
- 33 to 36: Memory
- 38: Computing unit
- 40: Rotating table
- 42: Liquid crystal panel
- 50: Reference object
- 52: Lattice
- 54: Rotating unit
- 56: Reference plate
- 58a, 58b: Lattice

## Claims

1. A compositing parameter generation device (22) that generates a compositing parameter for a three-dimensional measurement apparatus (2) that includes a plurality of units (4) that surround a measurement target (1) and are constituted by a projector (6) that projects a periodic lattice onto the measurement target (1) and a camera (8) that images the projected lattice, measures three-dimensional coordinates of a surface of the measurement target (1) using the respective units (4), and composites the measured three-dimensional coordinates by coordinate conversion between the units (4), the compositing parameter being for use for the coordinate conversion and being generated by the cameras (8) of the respective units (4) imaging a first lattice, which is displayed on a predetermined reference surface (42), the compositing parameter generation device (22) being **characterized by**:
means for storing, for respective pixels of the cameras (8), phases with respect to the first lattice, the phases being obtained from images in which the first lattice is captured by the cameras (8) of the respective units (4);
means for storing, for respective pixels of the cameras (8), three-dimensional coordinates of the reference surface (42) in coordinate systems of the respective cameras (8), the three-dimensional coordinates being obtained when a second lattice is projected from the projectors (6) of the respective units (4) onto the reference surface (42) and imaged by the cameras (8) of the respective units (4);
means (32) for interpolating phases of the respective pixels of the cameras (8), generating sub-pixels whose phases match each other between the cameras (8), and obtaining three-dimensional coordinates of the respective sub-pixels in the coordinate systems of the respective cameras (8); and
means (38) for generating a compositing parameter for converting the coordinate systems of the respective cameras (8) into a reference coordinate system that is common between the units (4) such that three-dimensional coordinates of sub-pixels having the same phases match each other between the units (4) in the reference coordinate system that is common between the units (4).

2. The compositing parameter generation device (22) for the three-dimensional measurement apparatus (2) according to claim 1, **characterized in that**
the first lattice is shifted by a distance that is one third or less of the pitch of the period of the lattice at a time, and is imaged at respective positions to which the first lattice is shifted.

3. The compositing parameter generation device (22) for the three-dimensional measurement apparatus (2) according to claim 2, **characterized by** further comprising:
a flat panel display whose screen serves as the reference surface (42) and on which the first lattice is displayed.

4. The compositing parameter generation device (22) for the three-dimensional measurement apparatus (2) according to claim 1, **characterized in that**
the phases of the respective pixels of the cameras (8) with respect to the first lattice are obtained from a plurality of second images obtained by regularly extracting pixels at varied positions from respective images of the first lattice captured without shifting.
